# EUROPÄISCHE PATENTANMELDUNG

(11) **EP 1 176 433 A2**
(43) Veröffentlichungstag der Anmeldung: **30.01.2002**
(21) Anmeldenummer: 01116498.5
(22) Anmeldetag: 06.07.2001
(51) Int. Cl.: G01V 8/14

(54) **Vorrichtung zur Erfassung oder Überwachung bewegter Vorgänge**

(30) Priorität: 25.07.2000 DE 10036095
(71) Anmelder: VITRONIC Dr.-Ing. Stein Bildverarbeitungssysteme GmbH, 65189 Wiesbaden (DE)
(72) Erfinder: Hoffmann, Burghard, 65232 Taunusstein (DE)
(74) Vertreter: Weber, Dieter, Dr.

(57) **Zusammenfassung**

Die vorliegende Erfindung betrifft eine Überwachung bewegter Vorgänge mit einem optischen Sensor (1) und einer Beleuchtungseinrichtung (12). Um eine Vorrichtung zur Erfassung ober Überwachung bewegter Vorgänge zur Verfügung zu stellen, bei der eine optimale Ausleuchtung des Erfassungsbereichs auch dann gewährleistet ist, wenn Gegenstände stark unterschiedlicher Größe erfaßt werden, bzw. wenn sich der Abstand zwischen Kamera und zu erfassendem Gegenstand von Gegenstand zu Gegenstand stark ändert, wird erfindungsgemäß vorgeschlagen, daß ein erster Umlenkspiegel (2, 2') derart angeordnet ist, daß das von der Beleuchtungseinrichtung (12) ausgehende Licht reflektiert wird.

## Beschreibung

Die vorliegende Erfindung betrifft eine Vorrichtung zur Erfassung oder Überwachung bewegter Vorgänge mit einem optischen Sensor und einer Beleuchtungseinrichtung.

In der Industrie gibt es zahlreiche Vorgänge, in denen Transportgüter oder Werkstoffe auf Förderbahnen transportiert werden. Mit Hilfe der eingangs genannten Vorrichtung kann beispielsweise die Dimension der Transportgüter erfaß werden. Eine weitere Anwendungsmöglichkeit ist die Erfassung von auf potentiell großflächigen Gegenständen aufgebrachten, optisch erfaßbaren Informationen. Gedacht ist dabei z. B. an eine Paketverteilanlage. In einer Paketverteilanlage werden Pakete der unterschiedlichsten Größe auf Transportbändern angeliefert. Dabei ist auf den Paketen beispielsweise eine Adresse aufgebracht, die durch die Vorrichtung gelesen werden kann. Die automatische Erfassung und Identifizierung auf Basis der erfaßten Daten der transportierten Gegenstände ist eine wesentliche Voraussetzung für die Automatisierung in der Paketversand- und -verteiltechnik aber z. B. auch in der Lagerverwaltung.

Eine solche Vorrichtung ist Stand der Technik und beispielsweise aus der DE 196 39 854 bekannt. Die Beleuchtungs- und Abbildungssituation der bekannten Vorrichtungen ist in Figur 1 schematisch dargestellt. Dargestellt ist ein Förderband 4, auf dem ein Paket P transportiert wird. Oberhalb des Förderbandes 4 ist eine Kamera 1 und eine Beleuchtungseinrichtung 12 angeordnet. Die optische Achse 10 der Kamera 1 und die optische Achse 17 der Beleuchtungseinrichtung 12 sind abgewinkelt zueinander angeordnet, so daß sie sich etwa in Höhe des Förderbandes 4 schneiden. Tritt nun das Paket P in die von der Beleuchtungseinrichtung 12 beleuchtete Beleuchtungsebene ein, so kann die Paketoberfläche 9 von der Kamera 1 gelesen werden.

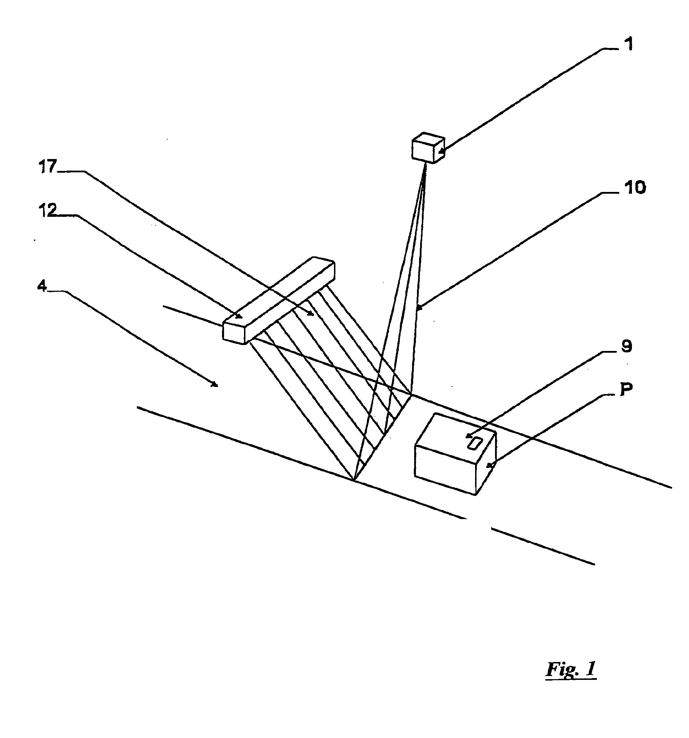

Die bekannten Vorrichtungen haben jedoch den Nachteil, daß eine optimal ausgeleuchtete Erfassung des Transportgegenstandes nur in der Nähe des Schnittpunktes der optischen Achse der Kamera und der optischen Achse der Beleuchtungseinheit möglich ist. Dies ist, insbesondere dann, wenn die zu erfassenden Transportgüter sich in ihrer Größe stark unterscheiden oder sich der Abstand zwischen Kamera und Transportgut ändern kann, von Nachteil. Soll beispielsweise in Figur 1 ein deutlich größeres Paket erfaßt werden, so durchläuft die obere Paketfläche 9 den Lichtstrahl 17 der Beleuchtungseinheit 12 in einer Ebene, in der der Lichtkegel der Beleuchtungseinheit 12 und die optische Achse 10 der Kamera 1 nicht mehr zusammenfallen. Die Folge ist eine unzureichende Beleuchtung der Paketoberfläche 9, so daß die Fehlerrate der Erfassung ansteigt.

Der vorliegenden Erfindung liegt daher die Aufgabe zugrunde, eine Vorrichtung zur Erfassung ober Überwachung bewegter Vorgänge zur Verfügung zu stellen, bei der eine optimale Ausleuchtung des Erfassungsbereichs auch dann gewährleistet ist, wenn Gegenstände stark unterschiedlicher Größe erfaßt werden, bzw. wenn sich der Abstand zwischen Kamera und zu erfassendem Gegenstand von Gegenstand zu Gegenstand stark ändert.

Diese Aufgabe wird dadurch gelöst, daß ein erster Umlenkspiegel derart angeordnet ist, daß das von der Beleuchtungseinrichtung ausgehende Licht reflektiert wird. Mit anderen Worten ist die Beleuchtungseinrichtung nicht direkt auf das Förderband bzw. die zu erfassenden Gegenstände ausgerichtet, sondern auf den ersten Umlenkspiegel, der wiederum das Licht derart reflektiert, daß die zu erfassenden Gegenstände von dem reflektierten Licht beleuchtet werden. Durch diesen Spiegel ist es möglich, den Winkel zwischen den optischen Achsen des optischen Sensors und der Beleuchtungseinheit zu verringern. Eine solche Verringerung ist bei den Ausführungsformen des Standes der Technik ohne Umlenkspiegel nur sehr eingeschränkt möglich, da aufgrund der geometrischen Ausdehnung des Gehäuses der Beleuchtungseinheit und des optischen Sensors der Winkel zwischen den optischen Achsen nicht beliebig verkleinert werden kann, ohne daß es zu Schattenbildung oder zu einer teilweisen Verdeckung des Sichtbereichs des Sensors durch die Beleuchtungseinrichtung kommt.

Der optische Sensor kann im Prinzip jeder beliebige Sensor sein. Besonders bevorzugt kommt hier aber ein Zeilensensor, z. B. eine CCD-Zeilenkamera, zur Anwendung. Mit Hilfe eines Zeilensensors können wesentlich höhere geometrische Auflösungen erzielt werden als mit herkömmlichen Flächensensoren.

Zwar kann mit einer Zeilenkamera jeweils nur eine Linie eines Objektes erfaßt werden, es ist jedoch möglich, mehrere aufeinanderfolgende Zeilen auszulesen, so daß aufgrund der Bewegung des Objektes bzw. Transportgutes eine zweidimensionale Erfassung des Objektes möglich ist.

Mit Vorteil weist die Beleuchtungseinrichtung eine linienförmige Lichtquelle auf, deren Licht durch eine Fokussiereinrichtung gebündelt wird. So ist gewährleistet, daß die linienförmige Erfassungsfläche der Zeilenkamera möglichst gut ausgeleuchtet wird.

Eine besonders bevorzugte Ausführungsform sieht vor, daß der optische Sensor auf einen zweiten Umlenkspiegel ausgerichtet ist, so daß die optische Achse des optischen Sensors von dem Spiegel umgelenkt wird. Mit anderen Worten ,blickt' der optische Sensor nicht direkt auf das Förderband bzw. die zu erfassenden Gegenstände, sondern auf den zweiten Umlenkspiegel, der das von den zu erfassenden Gegenständen reflektierte Licht zu dem optischen Sensor umlenkt. Durch diese Maßnahme kann der Winkel zwischen den optischen Achsen der Beleuchtungseinrichtung bzw. des optischen Sensors noch weiter verringert werden, da keinerlei Schattenbildung aufgrund des Gehäuses der Beleuchtungseinrichtung oder des optischen Sensors auftritt. Überdies können die beiden Umlenkspiegel mit Vorteil derart angeordnet werden, daß die optische Achse der Beleuchtungseinrichtung und die optische Achse des optischen Sensors zumindest teilweise parallel zueinander verlaufen.

Besonders bevorzugt ist eine Ausführungsform, bei welcher der erste Umlenkspiegel in einer Ebene liegt, die zwei Halbräume definiert, wobei die Beleuchtungseinrichtung in dem einen Halbraum und der zweite Umlenkspiegel in dem anderen Halbraum angeordnet ist. Mit anderen Worten ist aus Sicht der Beleuchtungseinrichtung der zweite Umlenkspiegel hinter dem ersten Umlenkspiegel angeordnet. Dadurch ist gewährleistet, daß der zweite Umlenkspiegel keinen Schatten werfen kann, da er sich nicht innerhalb des Lichtkegels, der von dem ersten Umlenkspiegel ausgeht, befindet.

Besonders zweckmäßig ist eine Ausführungsform, bei der der erste Umlenkspiegel eine, vorzugsweise schlitzförmige, Unterbrechung aufweist oder aus mindestens zwei nebeneinander angeordneten Spiegeln besteht. Dabei ist mit Vorteil der zweite Umlenkspiegel derart angeordnet, daß die optische Achse des optischen Sensors nach Umlenkung durch den zweiten Umlenkspiegel durch die Unterbrechung des ersten Umlenkspiegels oder zwischen zwei in einer Ebene angeordnete erste Umlenkspiegel verläuft. Durch diese Anordnung der beiden Umlenkspiegel ist der optische Sensor in der Lage, über den zweiten Umlenkspiegel durch die Unterbrechung des ersten Umlenkspiegels hindurch zu "sehen". Dabei sind die Umlenkspiegel am besten derart eingestellt, daß der von der Beleuchtungseinrichtung ausgehende, an dem ersten Umlenkspiegel reflektierte Lichtstrahl zu dem von den zu erfassenden Gegenständen ausgehende in Richtung des zweiten Umlenkspiegels verlaufende reflektierte Licht im wesentlichen parallel verläuft.

Mit Vorteil schließt die optische Achse der Beleuchtungsoptik (der von der Beleuchtungseinrichtung ausgehende Lichtstrahl) mit der Ebene des ersten Umlenkspiegels einen Winkel α < 90° ein und die Ebene des zweiten Umlenkspiegels schließt mit der Ebene des ersten Umlenkspiegels einen Winkel γ > 45° ein.

Besonders zweckmäßig ist eine Anordnung, bei der 100° - α/2 > γ > 80° - α/2, vorzugsweise 95° - α/2 > γ > 85° - α/2 und besonders bevorzugt γ etwa 90° - α/2 beträgt. Diese Anordnung erlaubt eine besonders kompakte Verwirklichung der Vorrichtung.

Für manche Anwendungsfälle kann es von Vorteil sein, wenn eine Einrichtung zum Einstellen von α und/oder eine Einrichtung zum Einstellen von y vorgesehen ist. Dies erlaubt im Bedarfsfalle eine Feinjustierung der optischen Achsen des Sensors bzw. der Beleuchtungseinrichtung.

Insbesondere für die Erfassung von sehr großen Transportgegenständen ist eine Ausführungsform von Vorteil, bei der der zweite Umlenkspiegel eine Länge aufweist, die größer als 25 cm, vorzugsweise größer als 50 cm, besonderes bevorzugt größer als 75 cm ist. Dabei ist der optischer Weg zwischen dem optischen Sensor und dem zweiten Umlenkspiegel mit Vorteil mindestens 0,5 m, vorzugsweise mindestens 2 m, besonderes bevorzugt mindestens 3 m lang. Durch den relativ langen optischen Weg kann eine Aufspreizung des Sichtfeldes mit geringer Parallaxe erreicht werden, in dem die Transportgegenstände abgefragt werden.

Eine besondere Ausführungsform der vorliegenden Erfindung sieht vor, daß der optische Weg des optischen Sensors zwischen dem optischen Sensor und dem zweiten Umlenkspiegel über mindestens einen, vorzugsweise zwei Faltungsspiegel verläuft. Der oder die Faltungsspiegel dienen dazu, den optischen Weg zwischen optischem Sensor und zweitem Umlenkspiegel zu falten, in dem das von dem zu erfassenden Objekt reflektierte Licht, nachdem es von dem zweiten Umlenkspiegel umgelenkt worden ist, von dem oder den Faltungsspiegeln reflektiert wird. Der Abstand zwischen optischem Sensor und zweitem Umlenkspiegel kann daher deutlich kleiner gewählt werden als der optische Weg zwischen den optischen Sensor und dem zweiten Umlenkspiegel.

Besonders bevorzugt ist eine Ausführungsform, bei der mindestens zwei Faltungsspiegel vorgesehen sind und bei der der optische Weg mindestens zweimal über den selben Faltungsspiegel verläuft. Durch diese Maßnahme kann der Abstand zwischen optischem Sensor und zweitem Umlenkspiegel noch stärker verkleinert werden, so daß eine kompakte Ausführung der erfindungsgemäßen Vorrichtung möglich ist. Es versteht sich, daß die Anordnung der Faltungsspiegel nicht auf eine Anordnung zwischen dem optischen Sensor und dem zweiten Umlenkspiegel begrenzt ist. Die Faltungsanordnung kann mit Vorteil in jeder optischen Anordnung verwendet werden, um beispielsweise den Abstand zwischen optischem Sensor und zu erfassendem Objekt zu verringern, ohne daß der optische Weg verkleinert wird.

Weitere Vorteile, Merkmale und Anwendungsmöglichkeiten werden deutlich anhand der folgenden Beschreibung einer besonderen Ausführungsform der Erfindung sowie der zugehörigen Figuren. Es zeigen:
Figur 1 eine schematische Darstellung der Beleuchtungs- und Abbildungssituation im Stand der Technik,
Figur 2 eine perspektivische Ansicht einer besonderen Ausführungsform,
Figur 3 eine schematische Ansicht der Faltungsanordnung und
Figur4 eine schematische Darstellung des Verlaufs der optischen Achsen von Beleuchtungseinrichtung und optischem Sensor.

Figur 1 ist eine schematische Darstellung einer im Stand der Technik bekannten Beleuchtungs- und Abbildungssituation, die bereits im Zusammenhang mit der Diskussion des Standes der Technik erläutert wurde.

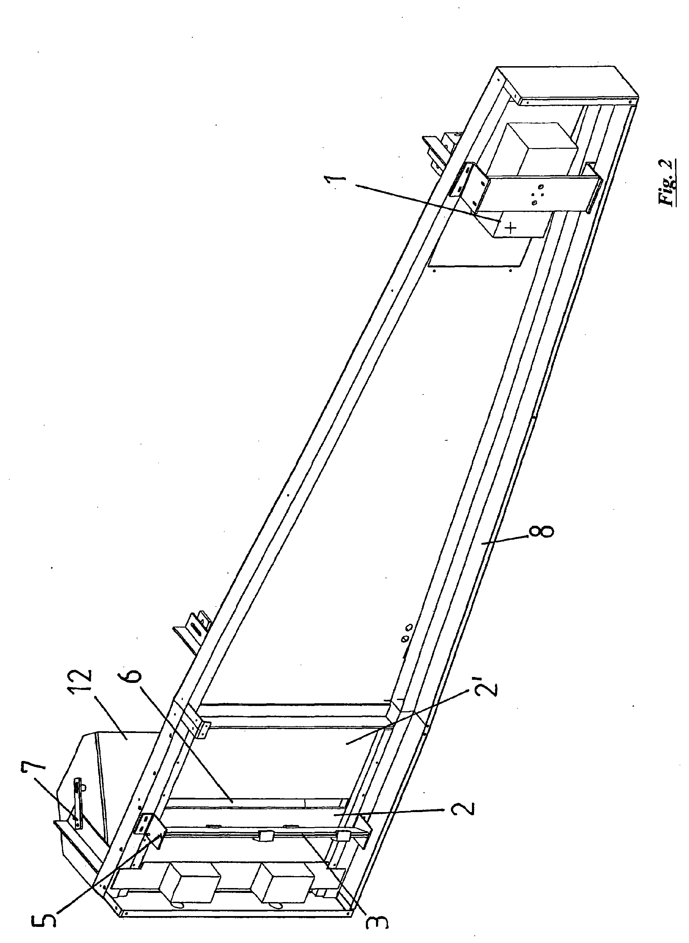

In Figur 2 ist eine Ausführungsform der erfindungsgemäßen Vorrichtung mit einer Zeilenkamera 1 und einer Beleuchtungseinrichtung 12 gezeigt. Die Vorrichtung weist einen Rahmen 8 auf, der dafür vorgesehen ist, in etwa parallel zu einem Förderband angeordnet zu werden, auf dem sich die zu erfassenden Gegenstände bewegen. Dabei verläuft das Förderband in der Figur 2 hinter dem Rahmen 8. Deutlich zu erkennen ist, daß die Beleuchtungseinrichtung 12 nicht direkt auf das Förderband bzw. die zu erfassenden Gegenstände gerichtet ist, sondern auf einen ersten Umlenkspiegel 2, 2', der in dem Rahmen 8 der Vorrichtung gehalten wird und den man in Figur 2 von seiner Rückseite her sieht. Der von der Beleuchtungseinrichtung 12 ausgehende Lichtstrahl wird daher an der Vorderseite des ersten Umlenkspiegels 2, 2' umgelenkt, bzw. reflektiert und trifft dann auf die zu erfassenden Gegenstände. Der erste Umlenkspiegel 2 weist hier einen Sichtschlitz 6 auf. Dabei kann der Sichtschlitz entweder in den ersten Umlenkspiegel 2, 2' eingearbeitet sein, oder dieser kann, wie es in der gezeigten Ausführungsform der Fall ist, aus zwei Teilspiegeln 2 bzw. 2' bestehen, die in einer Ebene liegen und etwas voneinander beabstandet sind. In der gezeigten Ausführungsform beträgt die Schlitzbreite etwa 2 cm. Vor dem Schlitz ist der zweite Umlenkspiegel 3 angebracht. Die Zeilenkamera 1 blickt daher auf den zweiten Umlenkspiegel 3 und kann somit durch den Sichtschlitz 6 auf das Transportband bzw. die zu erfassenden Gegenstände "blicken". Der Winkel α, mit dem der von der Beleuchtungseinrichtung 12 ausgehende Lichtstrahl auf den ersten Umlenkspiegel 2, 2' trifft, kann mit Hilfe der Einstellvorrichtung 7 verändert bzw. justiert werden.

Des weiteren ist bei der gezeigten Ausführungsform eine Einstellvorrichtung 5 vorgesehen, mit der der zweite Umlenkspiegel 3 so verstellt werden kann, daß sich der Winkel y zwischen der durch den ersten Umlenkspiegel verlaufenden Ebene und der durch den zweiten Umlenkspiegel verlaufenden Ebene ändert. Die Vorrichtung kann daher so eingestellt werden, daß die optische Achse des von der Beleuchtungseinrichtung 12 an dem ersten Umlenkspiegel 2, 2' reflektierten Lichtstrahls parallel zu der optischen Achse des an dem zweiten Umlenkspiegel 3 umgelenkten Lichtstrahls verläuft.

Bei der gezeigten Ausführungsform beträgt die Länge des Lichtschlitzes und damit die Länge des zweiten Umlenkspiegels 3 etwa 80 cm. Der Abstand zwischen dem zweiten Umlenkspiegel 3 und der Zeilenkamera 1 beträgt 2 m. Dadurch ergibt sich ein Abstand zwischen Kamera und Objekt von etwa 4 m.

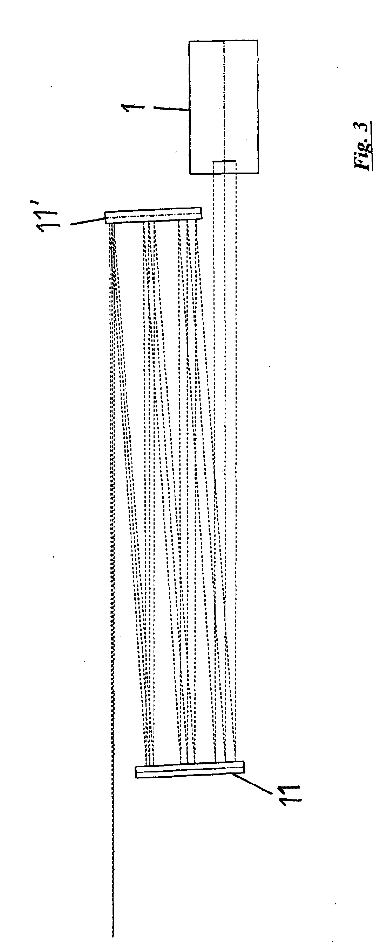

Der Abstand zwischen dem zweitem Umlenkspiegel und der Zeilenkamera kann durch die Verwendung einer Faltungsanordnung, wie sie in Figur 3 gezeigt ist, deutlich verringert werden.

Auch hier ist schematisch die Zeilenkamera 1 dargestellt. Zwei Faltungsspiegel 11, 11' sind derart angeordnet, daß der optische Weg, ausgehend von der Zeilenkamera 1 an den beiden Faltungsspiegeln 11 mehrmals umgelenkt wird. Der optische Weg ist in Bild 3 schematisch durch gestrichelte Linien dargestellt. Bei der gezeigten Anordnung wird der optische Weg von jedem der beiden Faltungsspiegel dreimal umgelenkt, so daß der optische Weg die Wegstrecke zwischen den beiden Faltungsspiegeln 11, 11' insgesamt sechsmal durchläuft. Der Verlauf des optischen Weges, der von der Zeilenkamera 1 ausgeht, ist zu dem, der die Faltungsanordnung verläßt, im wesentlichen parallel. Durch die Faltungsanordnung ist es möglich, die Zeilenkamera 1 sehr viel dichter an dem zweiten Umlenkspiegel 3 anzuordnen, so daß insgesamt eine kompaktere Bauweise möglich ist. Es versteht sich, daß der zweite Umlenkspiegel und - soweit vorgesehen - auch die Faltungsspiegel eine relativ hohe optische Qualität haben sollten. Dagegen können der erste Umlenkspiegel bzw. die ersten Umlenkspiegel relativ einfach sein, solange sie nur den von dem optischen Sensor zu erfassenden Teil einer Oberfläche gleichmäßig ausleuchten.

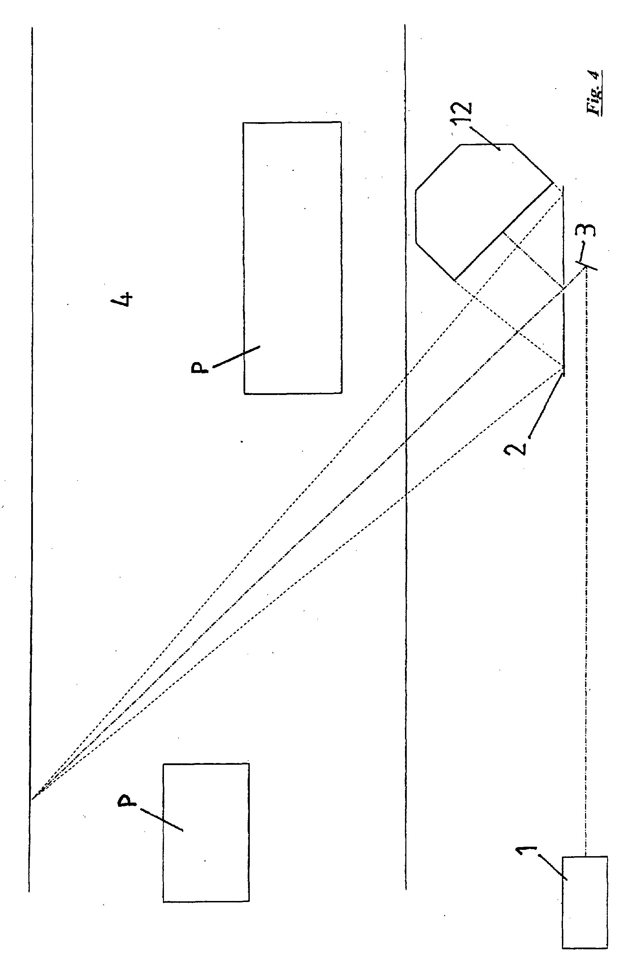

Zur Verdeutlichung ist in Figur 4 eine schematische Darstellung der erfindungsgemäßen Vorrichtung von oben, d.h. von oben auf das Transportband 4 blickend, gezeigt. Der von der Beleuchtungseinrichtung 12 beleuchtete Bereich ist durch die gestrichelten Linien dargestellt. Die optische Achse des optischen Sensors 1 ist durch eine strichpunktierte Linie dargestellt. In dieser Darstellung wird deutlich, daß die optische Achse des optischen Sensors 1, nachdem sie den zweiten Spiegel 3 'durchlaufen' hat, immer innerhalb des beleuchteten Bereichs verläuft. Dadurch ist gewährleistet, daß die zu lesende Fläche auf dem Objekt P auch dann immer optimal ausgeleuchtet ist, wenn sich der Abstand zwischen Sensor 1 und Objekt P von Objekt zu Objekt ändert. Dies ist ebenfalls durch die zwei Objekte P in Figur 4 angedeutet, die von der Erfassungsvorrichtung unterschiedlich weit beabstandet angeordnet sind.

## Patentansprüche

1. Vorrichtung zur Überwachung bewegter Vorgänge mit einem Sensor (1) und einer Beleuchtungseinrichtung (12), **dadurch gekennzeichnet, daß** ein erster Umlenkspiegel (2, 2') derart angeordnet ist, daß das von der Beleuchtungseinrichtung (12) ausgehende Licht reflektiert wird.

2. Vorrichtung nach Anspruch 1, **dadurch gekennzeichnet, daß** der Sensor (1) eine Zeilenkamera ist.

3. Vorrichtung nach Anspruch 1 oder 2, **dadurch gekennzeichnet, daß** die Beleuchtungseinrichtung (12) eine angenähert linienförmige Lichtquelle hat, deren Licht durch eine Fokussiereinrichtung gebündelt wird.

4. Vorrichtung nach einem der Ansprüche 1 bis 3, **dadurch gekennzeichnet, daß** der optische Sensor (1) auf einen zweiten Umlenkspiegel (3) ausgerichtet ist, so daß die optische Achse des optischen Sensors (1) von dem zweiten Umlenkspiegel (3) umgelenkt wird.

5. Vorrichtung nach Anspruch 4, **dadurch gekennzeichnet, daß** die optische Achse der Beleuchtungseinrichtung (12) und die optische Achse des optischen Sensors (1) teilweise parallel zueinander verlaufen.

6. Vorrichtung nach Anspruch 4 oder 5, **dadurch gekennzeichnet, daß** der erste Umlenkspiegel (2, 2') in einer Ebene liegt, die zwei Halbräume definiert, wobei die Beleuchtungseinrichtung (12) in dem einen Halbraum und der zweite Umlenkspiegel (3) in dem anderen Halbraum angeordnet sind.

7. Vorrichtung nach einem der Ansprüche 1 bis 6, **dadurch gekennzeichnet, daß** der erste Umlenkspiegel (2, 2') eine vorzugsweise schlitzförmige Unterbrechung (6) aufweist oder aus mindestens zwei in einer Ebene angeordneten Spiegeln (2, 2') besteht.

8. Vorrichtung nach Anspruch 7, **dadurch gekennzeichnet, daß** der zweite Umlenkspiegel (3) derart angeordnet ist, daß die optische Achse des optischen Sensors (1) durch die Unterbrechung (6) des ersten Umlenkspiegels (2, 2') oder zwischen zwei in einer Ebene angeordneten Spiegeln (2, 2') verläuft.

9. Vorrichtung nach einem der Ansprüche 4 bis 8, **dadurch gekennzeichnet, daß** die optische Achse der Beleuchtungseinrichtung (12) mit der Ebene des ersten Umlenkspiegels (2, 2') einen Winkel α < 90° einschließt und die Ebene des zweiten Umlenkspiegels (3) mit der Ebene des ersten Umlenkspiegels (2, 2') einen Winkel γ > 45° einschließt.

10. Vorrichtung nach Anspruch 9, **dadurch gekennzeichnet, daß** 100° - α/2 > γ > 80° - α/2, vorzugsweise 95° - α/2 > γ > 85° - α/2 und besonders bevorzugt γ etwa 90° - α/2 beträgt.

11. Vorrichtung nach Anspruch 9 oder 10, **dadurch gekennzeichnet, daß** eine Einrichtung (7) zum Einstellen von α und/oder eine Einrichtung (5) zum Einstellen von γ vorgesehen ist.

12. Vorrichtung nach einem der Ansprüche 4 bis 11, **dadurch gekennzeichnet, daß** der zweite Umlenkspiegel (3) eine Länge aufweist, die größer als 30 cm, vorzugsweise größer als 50 cm, besonders bevorzugt größer als 80 cm ist.

13. Vorrichtung nach einem der Ansprüche 4 bis 12, **dadurch gekennzeichnet, daß** der optische Weg zwischen dem optischen Sensor (1) und dem zweiten Umlenkspiegel (3) mindestens 0,5 m, vorzugsweise mindestens 2 m, besonders bevorzugt mindestens 3 m beträgt.

14. Vorrichtung nach einem der Ansprüche 4 bis 13, **dadurch gekennzeichnet, daß** der optische Weg des optischen Sensors (1) zwischen optischem Sensor (1) und zweiten Umlenkspiegel (3) über mindestens einen, vorzugsweise zwei Faltungsspiegel (11, 11') verläuft.

15. Vorrichtung nach Anspruch 14, **dadurch gekennzeichnet, daß** mindestens zwei Faltungsspiegel (11, 11') vorgesehen sind und daß der optische Weg mindestens zweimal über den selben Faltungsspiegel (11, 11') verläuft.
